# DEMANDE DE BREVET EUROPEEN

(11) **EP 1 486 836 A1**
(43) Date de publication de la demande: **15.12.2004**
(21) Numéro de dépôt: 04291479.6
(22) Date de dépôt: 11.06.2004
(51) Int. Cl.: G05B 19/042, A01B 63/00

(54) **Système modulaire de calculateurs en réseaux permettant une attribution automatique d'adresses**

(30) Priorité: 13.06.2003 FR 0307175
(71) Demandeur: Agrotronix, 62400 Bethune (FR)
(72) Inventeur: Lekeux, Olivier, 59500 Douai (FR); Pouillard, Laurent, 59134 Herlies (FR); Venel, Sébastien, 62400 Bethune (FR)
(74) Mandataire: de Roquemaurel, Bruno

(57) **Abrégé**

Système de calculateurs interconnectés en réseau au moyen d'un bus (20), comprenant un calculateur central (21) et des calculateurs périphériques (18) interconnectés en outre par des liaisons pour former une chaîne d'interconnexion, le calculateur central comprenant et des moyens pour émettre un signal logique d'adressage vers un premier calculateur périphérique de la chaîne, pour déclencher une procédure d'attribution d'adresses aux calculateurs périphériques, chaque calculateur périphérique comprenant des moyens d'exécution (30) d'une procédure de détermination d'adresse, déclenchée à la suite de la réception du signal logique d'adressage, et des moyens pour émettre le signal logique d'adressage vers le calculateur suivant dans la chaîne, lorsque l'exécution de la procédure de détermination d'adresse est terminée, le calculateur central (21) étant en outre connecté au dernier calculateur périphérique (18) de la chaîne, pour recevoir le signal logique d'adressage émis par celui-ci, indiquant que la procédure d'attribution d'adresses est terminée.

## Description

La présente invention concerne un système comprenant un calculateur central connecté à des calculateurs périphériques, et plus particulièrement la connexion du calculateur central aux calculateurs périphériques.

Elle s'applique notamment, mais non exclusivement, aux systèmes temps réel dans lesquels des calculateurs périphériques reliés à un calculateur central doivent être interchangeables et localisables les uns par rapport aux autres dans la chaîne d'interconnexion.

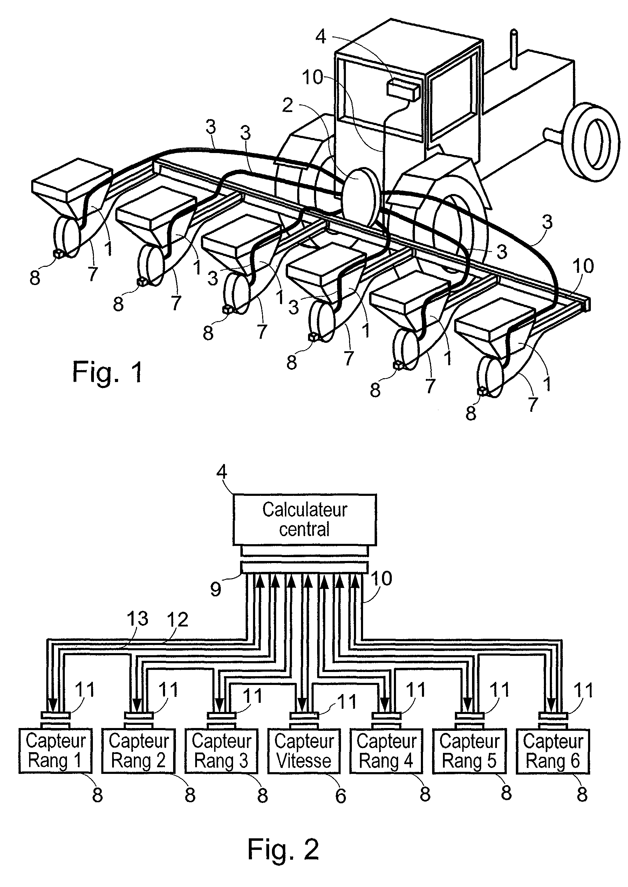

Un tel système est utilisé par exemple dans les machines agricoles telles que les semoirs de précision du type représenté sur la figure 1. Sur cette figure, le semoir comprend plusieurs éléments de semoir 1 pour semer plusieurs rangs simultanément, chaque élément de semoir étant associé à un capteur intelligent de comptage de graines semées. Chaque élément de semoir 1 est relié par une conduite 3 à une source 2 d'air comprimé pour expulser les graines. Chaque capteur intelligent comprend un calculateur périphérique 8 couplé à un capteur qui effectue un comptage de graines, chaque calculateur périphérique étant connecté à un calculateur central 4 par une liaison électrique 7 respective, pour délivrer sur cette liaison une impulsion électrique à chaque graine semée. Les liaisons électriques 7 sont rassemblées en un faisceau 10 de câbles électriques reliés au calculateur central 4.
Le calculateur central 4 est conçu pour vérifier qu'un débit minimum de graines semées par chaque élément de semoir 1 est bien respecté. Lorsque le débit de graines sur un élément de semoir est trop faible, le calculateur central émet un signal d'alarme pour prévenir l'opérateur.

L'architecture de ce système est représentée d'une manière schématique sur la figure 2. Cette figure montre le calculateur central 4 relié par un connecteur 9 au faisceau électrique 10, et les calculateurs périphériques 8 de comptage de graine, également reliés au faisceau électrique par l'intermédiaire d'un connecteur 11 respectif. Le faisceau électrique 10 permet en outre de relier au calculateur central 4 un calculateur périphérique 6 couplé à un capteur de vitesse, de manière à pouvoir adapter le débit de chaque élément de semoir à la vitesse du tracteur. Le faisceau électrique 10 comprend deux fils 12, 13 par calculateur périphérique 6, 8.

Or, pour augmenter le rendement d'un tel semoir, on a tendance à augmenter le nombre d'éléments de semoir. Le faisceau électrique 10 doit donc être modifié pour adapter son nombre de fils 12, 13 de câblage au nombre de capteurs à relier au calculateur central. Il en résulte également que le nombre de calculateurs périphériques 6, 8 à surveiller par le calculateur central 4 augmente d'autant, ce qui tend à saturer la puissance de traitement de ce dernier.
Pour résoudre ce problème, il est connu d'effectuer au niveau du calculateur central un séquencement temporel de la surveillance de chaque calculateur périphérique, cette surveillance consistant à vérifier régulièrement le débit de chacun des éléments de semoir les uns après les autres. Il en résulte que pendant qu'un élément de semoir est surveillé par le calculateur central, le calculateur central 4 ne traite pas les impulsions envoyées par les autres éléments de semoir. Il n'est pas possible d'effectuer un comptage du nombre total de graines semées.

Il est également connu, notamment dans le domaine de l'automobile, de remplacer un tel faisceau électrique par un bus par exemple de type série, notamment pour limiter le nombre de fils de câblage. Les réseaux utilisés dans ce domaine sont basés sur un protocole utilisant un système d'adressage pour l'échange de messages sur le bus. Les calculateurs connectés au bus reconnaissent qu'un message circulant à un instant donné sur le bus leur est destiné si l'adresse contenue dans le message correspond à celle qui leur a été attribuée lors de la configuration du réseau.

Par ailleurs, les systèmes de traitement d'information tendent à évoluer vers des architectures réseau dans lesquels le traitement de l'information n'est plus centralisé sur un seul calculateur, mais réparti sur plusieurs calculateurs identiques, moins puissants. Cette architecture présente l'avantage qu'une augmentation du volume d'informations transitant dans le réseau ne remet pas en cause l'architecture complète du système. Il suffit en effet d'ajouter au réseau un ou plusieurs calculateurs pour absorber la surcharge. Cette solution implique toutefois que le câblage entre les calculateurs soit limité afin d'éviter que la complexité du réseau augmente de manière trop importante avec le nombre de calculateurs du réseau.

Or, la mise en oeuvre d'un réseau nécessite des compétences particulières pour configurer le réseau formé des calculateurs interconnectés par le bus, et en particulier pour gérer les adresses respectives attribuées à chacun des calculateurs connectés au réseau.
Dans certaines applications comme celle du semoir décrit ci-avant, il est également nécessaire de pouvoir repérer les calculateurs périphériques les uns par rapport aux autres dans la chaîne d'interconnexion, notamment afin de pouvoir indiquer à l'opérateur en cas de défaillance quel est le calculateur périphérique concerné.

Il existe des réseaux dits à jeton tournant dans lesquels les calculateurs sont interconnectés en anneau. Dans un tel réseau, un message vide circule régulièrement. Si le calculateur qui reçoit le message vide n'a rien à émettre, il le retransmet au calculateur suivant dans le réseau en anneau. S'il a besoin d'émettre un message, il marque le message pour avertir les autres calculateurs du réseau qu'il est occupé. Les autres calculateurs ne font alors que retransmettre le message vers le calculateur suivant dans le réseau. Lorsque le message occupé revient au calculateur émetteur avec un marqueur indiquant que le message a été reçu par le destinataire, le calculateur retire le marqueur pour libérer le message. Il s'avère que les réseaux de ce type ne sont pas conçus pour répondre à des contraintes temps réel. En effet, la transmission d'un message nécessite qu'il soit reçu puis émis par tous les calculateurs connectés au réseau. En fait, ce type de réseau ne permet pas de paralléliser des traitements effectués par des calculateurs identiques.

D'après le document WO 97 22057, il est connu de former une chaîne de calculateurs interconnectés par un bus série à l'aide de liaisons supplémentaires de chaînage reliant les calculateurs du réseau deux à deux, chaque calculateur comportant une entrée et une sortie de signal d'adressage, connectées à des liaisons de chaînage respectives. Ce document décrit une procédure d'adressage automatique au cours de laquelle le premier calculateur de la chaîne reçoit sur son entrée de chaînage un signal d'adressage déclenchant l'exécution d'une procédure d'attribution d'adresse par le premier calculateur, au cours de laquelle le calculateur obtient par le bus série l'adresse qui lui est attribuée, puis émet sur sa sortie de signal d'adressage un signal d'adressage vers le calculateur suivant dans la chaîne pour déclencher l'exécution de la procédure d'attribution d'adresse par le calculateur suivant.

Cette solution implique la mise en oeuvre de trois liaisons entre chaque calculateur, sans compter les liaisons d'alimentation électrique des calculateurs. Il en résulte que l'ajout, la suppression ou le remplacement d'un calculateur du réseau sont peu aisées. En outre, les liaisons de chaînage ajoutées sont sensibles aux perturbations électriques qui sont fréquentes en milieu industriel, de telles perturbations électriques pouvant déclencher à mauvais escient la procédure d'adressage automatique sur un calculateur.

La présente invention a pour but de supprimer ces inconvénients, tout en proposant un réseau utilisable dans un environnement temps réel, nécessitant un câblage limité et dans lequel des calculateurs identiques sont interchangeables, sans nécessiter de configuration matérielle ou logicielle, et les calculateurs peuvent être localisés les uns par rapport aux autres dans la chaîne d'interconnexion. Cet objectif est atteint par la prévision d'un système de calculateurs comprenant un calculateur central et des calculateurs périphériques, connectés à un bus commun, chacun des calculateurs périphériques comprenant une entrée de signal logique d'adressage connectée à une sortie de signal logique d'adressage d'un autre calculateur et une sortie de signal logique d'adressage connectée à une entrée de signal logique d'adressage d'un autre calculateur, de manière à former une chaîne d'interconnexion comprenant un calculateur périphérique situé le plus en amont et un calculateur périphérique situé le plus en aval dans la chaîne d'interconnexion, le calculateur central comprenant une sortie de signal logique d'adressage connectée à l'entrée de signal logique d'adressage du calculateur périphérique situé le plus en amont dans la chaîne d'interconnexion, et des moyens pour émettre un signal logique d'adressage sur sa sortie de signal logique d'adressage, pour déclencher une procédure d'attribution d'adresses aux calculateurs périphériques, chaque calculateur périphérique comprenant des moyens de déclenchement et d'exécution d'une procédure de détermination d'adresse, à la suite de la réception du signal logique d'adressage sur son entrée de signal logique d'adressage, et des moyens pour émettre le signal logique d'adressage sur sa sortie de signal logique d'adressage, lorsque l'exécution de la procédure de détermination d'adresse est terminée.

Selon l'invention, le calculateur central comprend en outre une entrée de signal logique d'adressage connectée à la sortie de signal logique d'adressage du calculateur périphérique situé le plus en aval dans la chaîne d'interconnexion, pour recevoir le signal logique d'adressage émis par celui-ci, indiquant que la procédure d'attribution d'adresses est terminée.

Selon un mode de réalisation de l'invention, chacun des calculateurs périphériques comprend un ensemble de connexion respectif comportant :
- un connecteur amont pour connecter le calculateur périphérique à un calculateur immédiatement amont par rapport à la chaîne d'interconnexion,
- un connecteur aval pour connecter le calculateur périphérique à un calculateur immédiatement aval par rapport à la chaîne d'interconnexion,
- une liaison d'entrée de transmission du signal logique d'adressage reliant le connecteur amont à l'entrée de signal logique d'adressage du calculateur périphérique,
- une liaison de sortie de transmission du signal logique d'adressage reliant la sortie de signal logique d'adressage du calculateur périphérique au connecteur aval, et
- une partie du bus reliant le connecteur amont, le connecteur aval et le calculateur périphérique.

Avantageusement, l'ensemble de connexion de chaque calculateur périphérique comprend une liaison reliant le connecteur amont, le connecteur aval et le calculateur périphérique, pour alimenter en énergie électrique le calculateur périphérique et les calculateurs situés en aval et/ou en amont dans la chaîne d'interconnexion.

Selon un mode de réalisation de l'invention, l'ensemble de connexion de chaque calculateur périphérique comprend en outre une liaison de retour reliant le connecteur aval au connecteur amont, pour relier la sortie de signal logique d'adressage du calculateur périphérique situé le plus en aval dans la chaîne d'interconnexion à l'entrée de signal logique d'adressage du calculateur central, ou l'entrée de signal logique d'adressage du calculateur périphérique situé le plus en amont dans la chaîne d'interconnexion à la sortie de signal logique d'adressage du calculateur central, selon la position du calculateur central par rapport aux calculateurs périphériques.

Selon un autre mode de réalisation de l'invention, ce système comprend un bouchon disposé à chacune des extrémités de la chaîne d'interconnexion, le bouchon comprenant un connecteur pour se connecter au connecteur amont du calculateur périphérique situé le plus en amont dans la chaîne d'interconnexion, ou au connecteur aval du calculateur périphérique situé le plus en aval dans la chaîne d'interconnexion, et, connectés au connecteur, des moyens pour assurer l'adaptation d'impédance du bus et une liaison pour assurer la continuité entre la liaison de retour et la liaison d'entrée ou de sortie de l'ensemble de connexion auquel il est connecté.

Selon un autre mode de réalisation de l'invention, l'ensemble de connexion de chaque calculateur périphérique comprend en outre des moyens d'isolation galvanique interposés sur la liaison d'entrée reliant le connecteur amont à l'entrée de signal logique d'adressage du calculateur périphérique.

Selon un autre mode de réalisation de l'invention, chaque calculateur périphérique comprend des moyens pour déterminer l'adresse qui lui est attribuée durant l'exécution de la procédure d'adresse, en fonction d'une adresse transmise par le bus.

Selon un mode de réalisation de l'invention, chaque calculateur périphérique comprend des moyens pour émettre sur le bus une information d'identification associée à l'adresse qui lui est attribuée durant l'exécution de la procédure d'adresse.

Selon un mode de réalisation de l'invention, le calculateur central est connecté au connecteur amont du calculateur périphérique situé le plus en amont dans la chaîne d'interconnexion.

Selon un mode de réalisation de l'invention, le calculateur central est interposé par l'intermédiaire d'un ensemble de connexion dans la chaîne d'interconnexion des calculateurs périphériques.

Selon un mode de réalisation de l'invention, chaque calculateur périphérique comprend des moyens de temporisation pour déclencher l'émission d'un signal logique d'adressage sur sa sortie de signal logique d'adressage, à l'échéance d'un délai prédéfini à la suite de la réception du signal logique d'adressage sur son entrée de signal logique d'adressage.

Un mode de réalisation préféré de l'invention sera décrit ci-après, à titre d'exemple non limitatif, avec référence aux dessins annexés dans lesquels :
La figure 1 représente un engin agricole illustrant une application du système selon l'invention ;
La figure 2 représente schématiquement un système de calculateurs interconnectés, selon l'art antérieur ;
La figure 3 représente schématiquement un système de calculateurs en réseau selon l'invention ;
La figure 4 montre plus en détail un mode de réalisation du système représenté sur la figure 3 ;
Les figures 5 et 6 représentent des variantes selon l'invention du système représenté sur la figure 4 ;
La figure 7 montre plus en détail le mode de connexion selon l'invention, d'un calculateur périphérique au système représenté sur la figure 4.

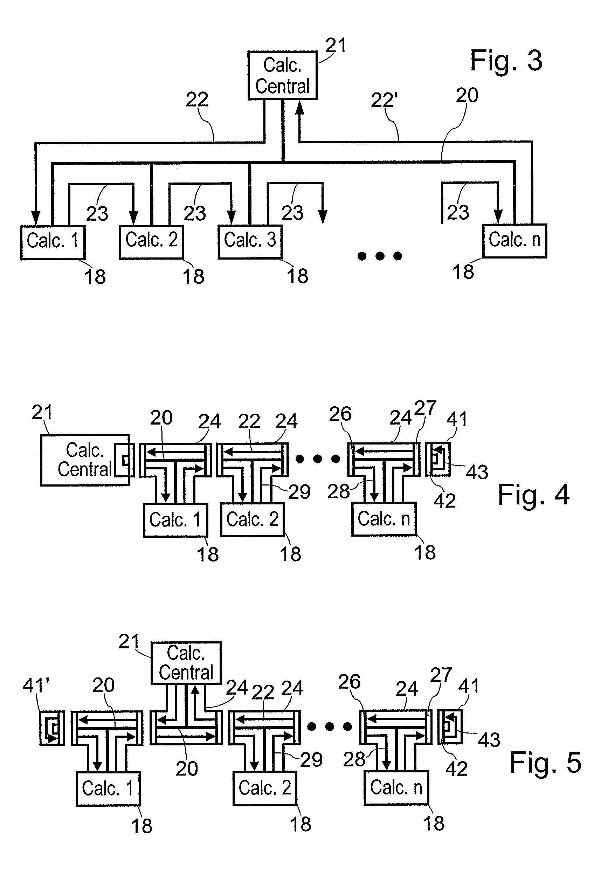

La figure 3 représente un système de calculateurs interconnectés par un bus série 20. Ce système comprend un calculateur central 21 et des calculateurs périphériques 18.

Selon l'invention, les calculateurs sont en outre interconnectés par des liaisons de chaînage 22, 23, chaque calculateur 18, 21 présentant une entrée et une sortie d'un signal logique d'adressage, l'entrée de signal d'adressage de chaque calculateur étant connectée à la sortie de signal d'adressage d'un unique autre calculateur. Les liaisons de chaînage 23 forment ainsi une chaîne de calculateurs 18, l'entrée de signal d'adressage du premier calculateur périphérique 18 de la chaîne étant connectée par une liaison de retour de chaînage 22 à une sortie de signal d'adressage du calculateur central 21, tandis que la sortie de signal d'adressage du dernier calculateur périphérique 18 de la chaîne est connectée par une liaison de retour de chaînage 22' à l'entrée de signal de chaînage du calculateur central 21.

Le bus 20 est par exemple de type Bus CAN (norme ISO 11898) ou ISOBUS (norme ISO 11783).

A la mise sous tension du système, le calculateur central 21 déclenche une procédure d'attribution d'adresses dans le réseau, en envoyant un signal d'adressage sur sa sortie de signal d'adressage, et se met en attente d'informations d'adresses transitant sur le bus 20 et d'un signal d'adressage sur son entrée de signal d'adressage.

Le signal d'adressage est reçu par le premier calculateur périphérique 18 de la chaîne par la liaison de retour de chaînage 22. La réception d'un tel signal sur un calculateur périphérique quelconque de la chaîne déclenche l'exécution d'une procédure d'attribution d'adresse par le calculateur périphérique. Cette procédure consiste à obtenir une adresse en accédant au bus 20, puis à émettre un signal d'adressage sur la sortie de signal d'adressage, ce signal étant reçu par le calculateur périphérique suivant dans la chaîne.
Lorsque le dernier calculateur périphérique 18 de la chaîne s'est ainsi attribué une adresse et émet un signal d'adressage sur sa sortie, ce signal est reçu par le calculateur central 21 qui considère alors que la procédure d'attribution d'adresse est terminée.

Plusieurs modes d'attribution d'adresses peuvent être envisagés. Dans un premier mode, le calculateur central 21 émet sur le bus 20 par exemple l'adresse qu'il s'est attribuée. Lorsqu'un calculateur périphérique est activé à la suite de la réception du signal d'adressage, il récupère l'adresse transitant sur le bus 20, s'attribue une adresse correspondant à l'adresse transitant sur le bus, incrémentée de un et émet sur le bus l'adresse qu'il s'est attribuée. Pendant ce temps, le calculateur central 21 écoute le bus et mémorise toutes les adresses différentes qui transitent sur le bus, et lorsqu'il reçoit le signal d'adressage, il sait que ce signal a été émis par le dernier calculateur périphérique 18 de la chaîne, et que celui-ci s'est attribué l'adresse qui transite sur le bus 20.

Dans un second mode d'attribution d'adresse, chaque calculateur périphérique 18 lorsqu'il est activé par la réception du signal d'adressage émet sur le bus 20 un message de demande d'adresse à destination du calculateur central 21. A la réception de ce message, le calculateur central émet sur le bus un message de réponse contenant la dernière adresse attribuée incrémentée de 1 par exemple.

Dans le cas où les calculateurs périphériques sont différents, on peut prévoir qu'à la réception du signal de chaînage, chaque calculateur périphérique émet à destination du calculateur central 21 un message contenant son adresse et un identifiant permettant de déterminer par exemple son type.

Grâce à ces dispositions, les calculateurs périphériques 18 sont interchangeables sans nécessiter de programmation ou de configuration de la part de l'utilisateur. En outre, le calculateur central 21 connaît le nombre de calculateurs périphériques connectés au réseau et peut déterminer la position de chaque calculateur périphérique dans la chaîne, à l'aide de l'adresse qui lui a été attribuée.

Le signal d'adressage peut être une impulsion ou simplement le passage d'un état logique inactif à un état logique actif. Dans ce dernier cas, à la mise sous tension du système, toutes les sorties de signal d'adressage sont à l'état inactif. Il peut s'agir également d'un signal numérique plus complexe, par exemple un signal série véhiculé par un bus série.

Sur la figure 4, chaque calculateur périphérique 18 est couplé selon l'invention à un ensemble de connexion 24 comprenant un connecteur amont 26 pour se connecter à un calculateur 18, 21 situé en amont dans la chaîne et un connecteur aval 27 pour se connecter à un calculateur périphérique 18 situé en aval dans la chaîne.
De cette manière, le calculateur central 21 et les calculateurs périphériques 18 peuvent être interconnectés de manière à former une chaîne dont une extrémité est constituée par le calculateur central 21 qui est connecté au connecteur amont du premier calculateur périphérique de la chaîne, le connecteur aval du dernier calculateur de la chaîne étant connecté à un bouchon 41 d'adaptation d'impédance du bus 20, muni d'un connecteur 42.

Chaque ensemble de connexion 24 intègre en outre :
- une partie du bus 20 entre les connecteurs amont et aval 26, 27 et entre le calculateur associé,
- une liaison 28 de chaînage entre le connecteur amont 26 et l'entrée de signal d'adressage du calculateur associé,
- une liaison 29 de chaînage entre la sortie du signal d'adressage du calculateur associé et le connecteur aval 27, et
- une liaison 22 de retour de chaînage entre les deux connecteurs pour assurer la liaison de retour entre le dernier calculateur périphérique de la chaîne et le calculateur central 21.

Le bouchon 41 comprend en outre une liaison 43 assurant la continuité entre les liaisons 29 et 22 de l'ensemble de connexion 24 du dernier calculateur périphérique de la chaîne.

L'association de chaque calculateur périphérique 18 à un tel ensemble de connexion 24 permet de réaliser une architecture modulaire dans laquelle chaque calculateur périphérique est totalement interchangeable et intégrable dans la chaîne uniquement au moyen de deux connecteurs 26, 27.

Tel que représenté sur la figure 5, le calculateur central 21 peut être également disposé n'importe où dans la chaîne. A cet effet, il est associé à un ensemble de connexion 24 connecté dans la chaîne de manière à ce que la liaison 22 de l'ensemble de connexion du calculateur central soit connectée aux liaisons 28 et 29 d'ensembles de connexion amont et aval, et les liaisons 28 et 29 de l'ensemble de connexion du calculateur central soient connectées aux liaisons 22 des ensembles de connexion 24 amont et aval. Dans ce cas, il faut en outre disposer des bouchons 41, 41' à chaque extrémité de la chaîne de manière à conserver l'adaptation d'impédance du bus 20 et à assurer la continuité au niveau des liaisons de retour de chaînage 22, 22' avec le calculateur central.

Dans la configuration de la figure 5, la liaison 22 de retour de chaînage entre les deux connecteurs 26, 27 des ensembles de connexion associés aux calculateurs périphériques assure également la liaison d'aller entre le calculateur central et le premier calculateur de la chaîne.

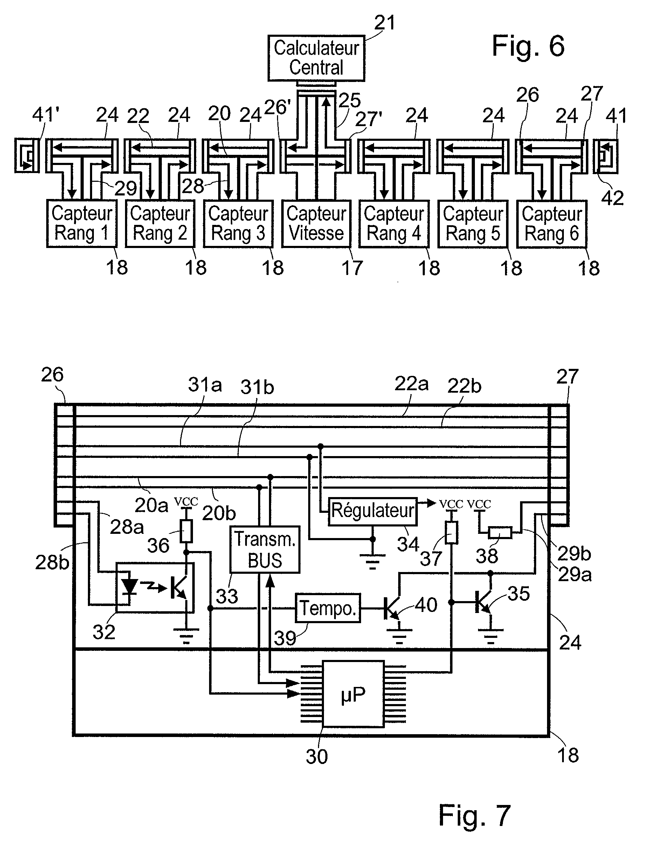

Cette architecture est tout à fait adaptable au système de semoir représenté sur les figures 1 et 2, comme le montre la figure 6. Sur cette figure, le système représenté présente une configuration en râteau dans laquelle le calculateur central 21 est couplé à un ensemble de connexion particulier 25 associé à un capteur de vitesse intelligent 17. L'ensemble de connexion 25 comporte des connecteurs amont et aval 26', 27' du type précédemment décrit, conçus pour se connecter à des ensembles de connexion 24 associés aux calculateurs périphériques 18 couplés aux capteurs de détection de graine. L'ensemble de connexion 25 permet ainsi à partir des connecteurs 26', 27' respectivement, de réaliser deux branches de chaînage de part et d'autre de l'ensemble de connexion 25, chaque chaîne se terminant par un bouchon 41, 41' respectif, tel que décrit précédemment.

A cet effet, l'ensemble de connexion 25 comprend en outre des liaisons permettant d'assurer la continuité entre les deux branches du chaînage des calculateurs périphériques et la connexion du calculateur central 21 à la chaîne, ainsi que la connexion du calculateur 17 couplé au capteur de vitesse et du calculateur central au bus 20, et la continuité du bus 20 entre les deux branches du chaînage.

Il est à noter que le calculateur périphérique 17 associé au capteur de vitesse n'est pas intégré dans la chaîne, mais est simplement connecté au bus 20, du fait qu'il n'est pas nécessaire de le localiser.

Grâce à ces dispositions, si l'on souhaite ajouter un élément de semoir, il suffit d'ajouter dans la chaîne un calculateur périphérique 18 associé à un capteur de détection de graine. Le système ainsi décrit présente donc une puissance de calcul répartie qui peut être adaptée facilement au nombre de rang du semoir, et ce sans risque de saturation du calculateur central.

Par ailleurs, pour pouvoir disposer d'une connexion standard pour le type de bus 20 choisi au niveau du calculateur central 21, le calculateur du capteur de vitesse 17 peut alternativement jouer le rôle de calculateur central. A cet effet, le capteur de vitesse 17 est connecté aux liaisons de chaînage 28, 29, à la place du calculateur central 21 et, à sa mise sous tension, il déclenche et gère la l'adressage des calculateurs périphériques 18.

La figure 7 montre en détail un calculateur périphérique 18 associé à un ensemble de connexion 24, selon un premier mode de réalisation préféré de l'invention. Sur cette figure, le calculateur périphérique 18 comprend un processeur 30 par exemple de type microcontrôleur ou microprocesseur.

L'ensemble de connexion 24 comprend :
- une partie du bus 20 constitué de deux lignes 20a et 20b et reliant le connecteur amont 26 au connecteur aval,
- un circuit de transmission 33 assurant la liaison entre le bus 20 et le processeur 30, et
- un opto-coupleur 32 relié d'un côté à la liaison 28 d'entrée de chaînage de l'ensemble de connexion 24, et de l'autre à une entrée du processeur 30, cet opto-coupleur réalisant une isolation galvanique entre les calculateurs et d'offrant ainsi une bonne immunité au bruit.

La liaison 29 de sortie de chaînage est reliée à une sortie du processeur 30.

Plus précisément, la liaison 28 comprend deux lignes 28a, 28b qui sont connectées aux bornes de la diode lumineuse d'entrée de l'opto-coupleur 32. Le collecteur du phototransistor de sortie de l'opto-coupleur est relié à une source d'alimentation VCC par l'intermédiaire d'une résistance 36, ainsi qu'à une entrée du processeur 30, tandis que l'émetteur du photo transistor est connectée à la masse. La liaison de sortie de chaînage 29 comprend également deux lignes 29a, 29b, la ligne 29b étant reliée à la source d'alimentation VCC par l'intermédiaire d'une résistance 38, tandis que la ligne 29a est reliée au collecteur d'un transistor npn 35 dont l'émetteur est à la masse et la base est reliée d'une part à la source d'alimentation VCC par l'intermédiaire d'une résistance 37, et d'autre part, à une sortie du processeur 30.

Avantageusement, l'ensemble de connexion 24 assure l'alimentation électrique du calculateur. A cet effet, l'ensemble de connexion comprend un circuit de régulation 34 alimenté par une liaison d'alimentation intégrée dans l'ensemble de connexion 24. Cette liaison d'alimentation comprend une ligne 31a à la tension d'alimentation VCC et une ligne 31b reliée à la masse, ces deux lignes étant connectées aux connecteurs amont et aval 26, 27.

La liaison 22 de retour de chaînage comprend également deux lignes 22a, 22b intégrées dans l'ensemble de connexion 24.

Bien entendu, le calculateur 18 peut comprendre d'autres éléments tels que des capteurs (non représentés) pour assurer la fonction qui lui est dédiée.

Or si le processeur 30 ne fonctionne plus au moment du passage de son entrée de chaînage 28 au niveau actif, sa sortie de chaînage 29 ne sera jamais positionnée au niveau actif. Le calculateur aval ne déclenchera donc jamais la procédure d'attribution d'adresse, et le calculateur central ne verra jamais son entrée de chaînage passer au niveau actif.

Pour éviter que la procédure d'adressage soit ainsi interrompue si l'un des calculateurs périphériques de la chaîne est défaillant, l'ensemble de connexion 24 comprend en outre un circuit de temporisation 39 en série avec une jonction base-collecteur d'un transistor npn 40 dont l'émetteur est à la masse, ces deux éléments étant montés en parallèle avec le processeur 30 entre la source d'alimentation VCC et la ligne 29a. Le circuit de temporisation 39 est conçu pour forcer à l'état actif la sortie de chaînage du calculateur après écoulement d'une durée prédéfinie, par exemple 1 seconde, à la suite du passage à l'état actif de l'entrée de chaînage 28.

Cette disposition permet d'éviter que la procédure d'adressage s'interrompe avant que tous les calculateurs périphériques n'aient reçu une adresse. Tous les calculateurs périphériques en état de marche disposant d'une adresse, le système peut donc fonctionner en mode dégradé

Cette disposition permet également au calculateur central à la fois de détecter qu'un calculateur est en panne pendant la procédure d'attribution d'adresses et de déterminer la position de celui-ci dans la chaîne d'interconnexion. Il lui suffit pour cela de surveiller les temps de réponse des calculateurs périphériques, par exemple en lançant une temporisation logicielle de 1 seconde à chaque fois qu'il reçoit une adresse par le bus 20. Si cette temporisation se déclenche, cela signifie que le calculateur n qui suit le dernier calculateur n-1 ayant été adressé est défaillant. A l'échéance de cette temporisation, il déclenche à nouveau la temporisation pour surveiller l'adressage du calculateur suivant n+1 dans la chaîne. Le calculateur central est donc capable de déterminer le nombre de calculateurs périphériques connectés dans la chaîne, et les positions dans la chaîne des éventuels calculateurs périphériques en panne.

## Revendications

1. Système de calculateurs comprenant un calculateur central (21) et des calculateurs périphériques (18), connectés à un bus commun (20), chacun des calculateurs périphériques comprenant une entrée de signal logique d'adressage connectée à une sortie de signal logique d'adressage d'un autre calculateur et une sortie de signal logique d'adressage connectée à une entrée de signal logique d'adressage d'un autre calculateur, de manière à former une chaîne d'interconnexion comprenant un calculateur périphérique situé le plus en amont et un calculateur périphérique situé le plus en aval dans la chaîne d'interconnexion, le calculateur central comprenant une sortie de signal logique d'adressage connectée à l'entrée de signal logique d'adressage du calculateur périphérique situé le plus en amont dans la chaîne d'interconnexion, et des moyens pour émettre un signal logique d'adressage sur sa sortie de signal logique d'adressage, pour déclencher une procédure d'attribution d'adresses aux calculateurs périphériques, chaque calculateur périphérique comprenant des moyens de déclenchement et d'exécution (30) d'une procédure de détermination d'adresse, à la suite de la réception du signal logique d'adressage sur son entrée de signal logique d'adressage, et des moyens pour émettre le signal logique d'adressage sur sa sortie de signal logique d'adressage, lorsque l'exécution de la procédure de détermination d'adresse est terminée,
**caractérisé en ce que** le calculateur central (21) comprend en outre une entrée de signal logique d'adressage connectée à la sortie de signal logique d'adressage du calculateur périphérique (18) situé le plus en aval dans la chaîne d'interconnexion, pour recevoir le signal logique d'adressage émis par celui-ci, indiquant que la procédure d'attribution d'adresses est terminée.

2. Système de calculateurs selon la revendication 1,
**caractérisé en ce que** chacun des calculateurs périphériques comprend un ensemble de connexion (24) respectif comportant :
- un connecteur amont (26) pour connecter le calculateur périphérique à un calculateur immédiatement amont par rapport à la chaîne d'interconnexion,
- un connecteur aval (27) pour connecter le calculateur périphérique à un calculateur immédiatement aval par rapport à la chaîne d'interconnexion,
- une liaison d'entrée (28) de transmission du signal logique d'adressage reliant le connecteur amont à l'entrée de signal logique d'adressage du calculateur périphérique,
- une liaison de sortie (29) de transmission du signal logique d'adressage reliant la sortie de signal logique d'adressage du calculateur périphérique au connecteur aval, et
- une partie du bus (20) reliant le connecteur amont, le connecteur aval et le calculateur périphérique.

3. Système de calculateurs selon la revendication 2,
**caractérisé en ce que** l'ensemble de connexion (24) de chaque calculateur périphérique (18) comprend une liaison (31) reliant le connecteur amont (26, 26'), le connecteur aval (27, 27') et le calculateur périphérique (18), pour alimenter en énergie électrique le calculateur périphérique et les calculateurs situés en aval et/ou en amont dans la chaîne d'interconnexion.

4. Système de calculateurs selon la revendication 2 ou 3,
**caractérisé en ce que** l'ensemble de connexion (24) de chaque calculateur périphérique (18) comprend en outre une liaison de retour (22) reliant le connecteur aval (27) au connecteur amont (26), pour relier la sortie de signal logique d'adressage du calculateur périphérique situé le plus en aval dans la chaîne d'interconnexion à l'entrée de signal logique d'adressage du calculateur central (21), ou l'entrée de signal logique d'adressage du calculateur périphérique situé le plus en amont dans la chaîne d'interconnexion à la sortie de signal logique d'adressage du calculateur central, selon la position du calculateur central par rapport aux calculateurs périphériques.

5. Système de calculateurs selon l'une des revendications 2 à 4,
**caractérisé en ce qu'**il comprend un bouchon (41, 41') disposé à chacune des extrémités de la chaîne d'interconnexion, le bouchon comprenant un connecteur (42) pour se connecter au connecteur amont (26) du calculateur périphérique (18) situé le plus en amont dans la chaîne d'interconnexion, ou au connecteur aval (27) du calculateur périphérique (18) situé le plus en aval dans la chaîne d'interconnexion, et, connectés au connecteur (42), des moyens pour assurer l'adaptation d'impédance du bus (20) et une liaison (43) pour assurer la continuité entre la liaison (22) de retour et la liaison d'entrée ou de sortie (28, 29) de l'ensemble de connexion (24) auquel il est connecté.

6. Système de calculateurs selon l'une des revendications 2 à 5,
**caractérisé en ce que** l'ensemble de connexion (24) de chaque calculateur périphérique (18) comprend en outre des moyens d'isolation galvanique (32) interposés sur la liaison d'entrée (28) reliant le connecteur amont (26) à l'entrée de signal logique d'adressage du calculateur périphérique.

7. Système de calculateurs selon l'une des revendications 1 à 6,
**caractérisé en ce que** chaque calculateur périphérique (18) comprend des moyens pour déterminer l'adresse qui lui est attribuée durant l'exécution de la procédure d'adresse, en fonction d'une adresse transmise par le bus (20).

8. Système de calculateurs selon l'une des revendications 1 à 7,
**caractérisé en ce que** chaque calculateur périphérique (18) comprend des moyens pour émettre sur le bus (20) une information d'identification associée à l'adresse qui lui est attribuée durant l'exécution de la procédure d'adresse.

9. Système de calculateurs selon l'une des revendications 1 à 8,
**caractérisé en ce que** le calculateur central (21) est connecté au connecteur amont (26) du calculateur périphérique (18) situé le plus en amont dans la chaîne d'interconnexion.

10. Système de calculateurs selon l'une des revendications 1 à 8,
**caractérisé en ce que** le calculateur central (21) est interposé par l'intermédiaire d'un ensemble de connexion (24, 25) dans la chaîne d'interconnexion des calculateurs périphériques (18).

11. Système de calculateurs selon l'une des revendications 1 à 10,
**caractérisé en ce que** chaque calculateur périphérique (18) comprend des moyens de temporisation (39) pour déclencher l'émission d'un signal logique d'adressage sur sa sortie (29) de signal logique d'adressage, à l'échéance d'un délai prédéfini à la suite de la réception du signal logique d'adressage sur son entrée (28) de signal logique d'adressage.
